(19) Europäisches Patentamt
European Patent Office
Office européen des brevets

(11) **EP 1 770 480 A2**

(12) **EUROPÄISCHE PATENTANMELDUNG**

(43) Veröffentlichungstag:
**04.04.2007 Patentblatt 2007/14**

(51) Int Cl.:
***G06F 3/00*** *(2006.01)*

(21) Anmeldenummer: **06450115.8**

(22) Anmeldetag: **23.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **29.08.2005 AT 14132005**

(71) Anmelder: **FREQUENTIS GmbH**
**1120 Wien (AT)**

(72) Erfinder:
- **Kerö, Nikolaus**
**2380 Perchtoldsdorf (AT)**
- **Täubl, Gerhard**
**1140 Wien (AT)**

(74) Vertreter: **Wildhack, Helmut et al**
**Patentanwälte Wildhack - Jellinek**
**Landstrasser Hauptstrasse 50**
**1030 Wien (AT)**

(54) **Verfahren und Auswertung von Touch-Signalen und Touch-Einheit**

(57)      Die Erfindung betrifft ein Verfahren zur Auswertung von Touch-Signalen einer Touch-Einheit, die zwei Widerstandsfolien (1, 2) umfasst. Erfindungsgemäß ist vorgesehen, dass in zumindest einer der beiden Widerstandsfolien (1, 2) der bei Anlegen einer vorgegebenen Prüfspannung (UX, UY) hervorgerufene Strom (IX, IY) gemessen und als Sollstromwert (IXS, IYS) gespeichert wird, dass, insbesondere nach Feststellung des Vorliegens zumindest eines Touches, der bei einem neuerlichen Anlegen der Prüfspannung an zumindest eine der Widerstandsfolien (1, 2) in der jeweils anderen Widerstandsfolie (1, 2) fließende Iststrom (IX, IY) gemessen und mit dem zuvor für diese Widerstandsfolie (1, 2) erhaltenen Sollstromwert (IXS, IYS) verglichen wird, und dass für den Fall, dass der in zumindest einer der Widerstandsfolien (1, 2) gemessene Iststrom (IX, IY) größer ist als der Sollstromwert (IXS, IYS), das Vorliegen eines Double Touches angenommen wird (Fig. 8).

**EP 1 770 480 A2**

**Beschreibung**

Die Erfindung betrifft ein Verfahren gemäß dem Oberbegriff des Anspruches 1 sowie eine Touch-Einheit gemäß dem Oberbegriff des Patentanspruches 5.

Aus der US 2004/0090431 und US 2003/0063073 sind Verfahren und Einrichtungen zur Erkennung von Double Touches bekannt.

Ziel der Erfindung ist es, das Vorliegen eines Double Touches bei Touch-Einheiten exakt und eindeutig mit geringen schaltungstechnischem Aufwand feststellen zu können. Der erforderliche schaltungstechnische und konstruktive Aufbau soll möglichst einfach und kostengünstig und gleichzeitig auch betriebssicher sein. Wesentlich jedoch ist die rasche und eindeutige Erkennbarkeit des Vorliegens eines Double Touches.

Die Ziele werden bei einem Verfahren der oben genannten Art durch die im Kennzeichen des Anspruches 1 angeführten Merkmale erreicht. Eine erfindungsgemäße Touch-Einheit ist mit den im Kennzeichen des Anspruches 5 angeführten Merkmalen gekennzeichnet.

Im folgenden wird die Erfindung anhand der Zeichnungen näher erläutert. Es zeigen: Fig. 1 schematisch zwei im Abstand angeordnete Widerstandsfolien einer Touch-Einheit mit einer Auswerteeinheit, Fig. 2 ein Ersatzschaltbild, Fig. 3 ein schematisches Blockschaltbild für die Ermittlung des Vorliegens eines Touches, Fig. 4 schematisch den Programmablauf eines Auswerteverfahrens betreffend die Beurteilung des Vorliegens eines Touches bei einer Touch-Einheit, Fig. 5 ein Ersatzschaltbild für einen Double Touch, Fig. 6 ein vereinfachtes Ersatzschaltbild, Fig. 7 schematisch eine erfindungsgemäße Touch-Einheit bzw. eine Anordnung zur Ermittlung des Vorliegens eines Double Touches und Fig. 8 schematisch ein Ablaufdiagramm betreffend die erfindungsgemäße Vorgangsweise.

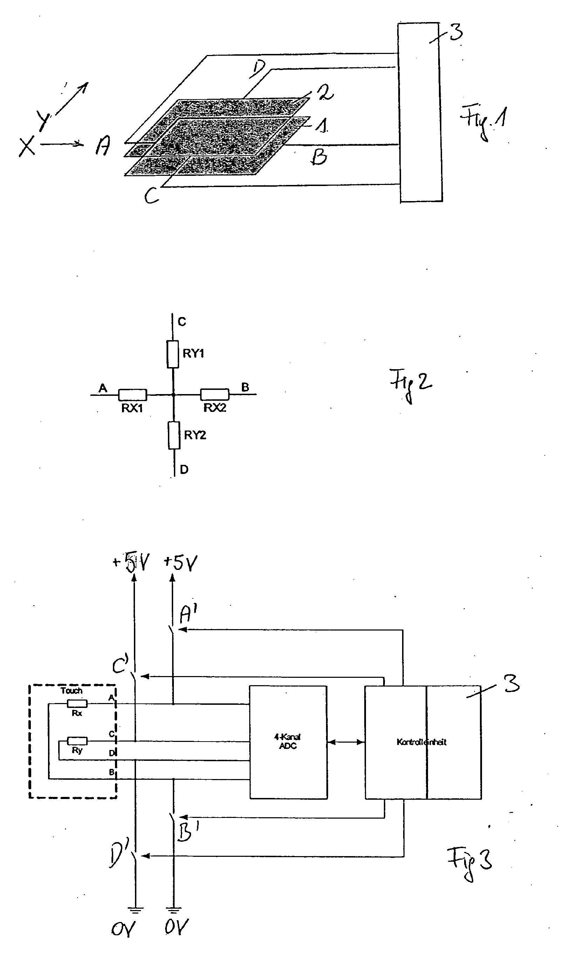

Fig. 1 zeigt schematisch eine grundlegende Ausbildung einer Touch-Einheit. Eine derartige Touch-Einheit umfasst zwei, insbesondere durchsichtige, Widerstandsfolien 1, 2 die im Abstand zueinander angeordnet sind. In ihren gegenüberliegenden Endbereichen sind die Widerstandsfolien 1, 2 kontaktiert, um eine Messspannung an die Folien 1, 2 anlegen zu können. Die eine Widerstandsfolie 1 weist Kontakte A und B auf, die die X Richtung vorgeben sollen; die andere Widerstandsfolie 2 weist die Kontakte C und D auf, welche die Y Richtung definieren. Die Anschlüsse sind an eine Steuer- bzw. Auswerteeinheit 3 geführt, mit der vorgegebene Spannungswerte an die Anschlüsse A und B bzw. C und D zu den entsprechend vorgegebenen Zeiten angelegt werden. Des weiteren misst die Steuer- bzw. Auswerteeinheit 3 zu gegebenen Zeiten die zwischen den nicht spannungsbeaufschlagten Anschlüssen auftretenden Spannungen mittels einer Spannungs- Strommesseinheit.

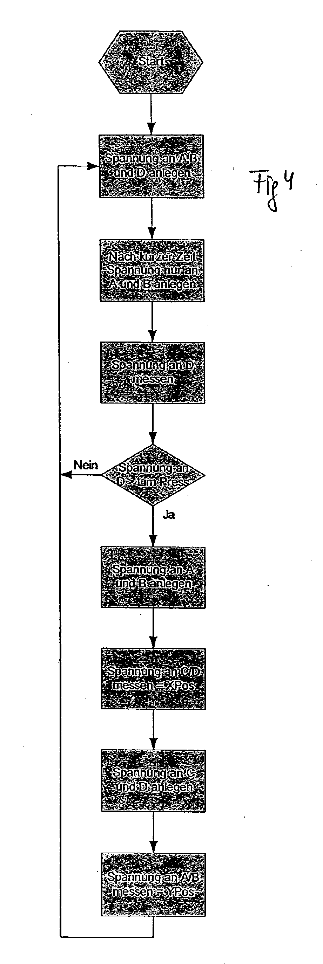

Wird ein Touch ausgelöst so ergibt sich das in Fig. 2 dargestellte Ersatzschaltbild. Wird abwechselnd an die Anschlussstellen AB und CD eine Spannung angelegt, so kann die X-Y-Position des Touches durch Spannungsmessung ermittelt werden:

Wird eine Messspannung in X Richtung angelegt, z.B. in Punkt A +5V und in Punkt B 0V, so ergibt sich über die X-Positionen ein Spannungsabfall zwischen dem Punkt C und D von +5V nach 0V entsprechend folgender Gleichung:

$$Xpos = 5V*RX2/(RX1+RX2)$$

Äquivalent ergibt sich für die Y Richtung, sofern eine Messspannung, z.B. +5V an Punkt C und 0V an Punkt D, angelegt wird und die Spannung an den Punkten A oder B abgegriffen wird:

$$Ypos = 5V*RY2/(RY1+RY2).$$

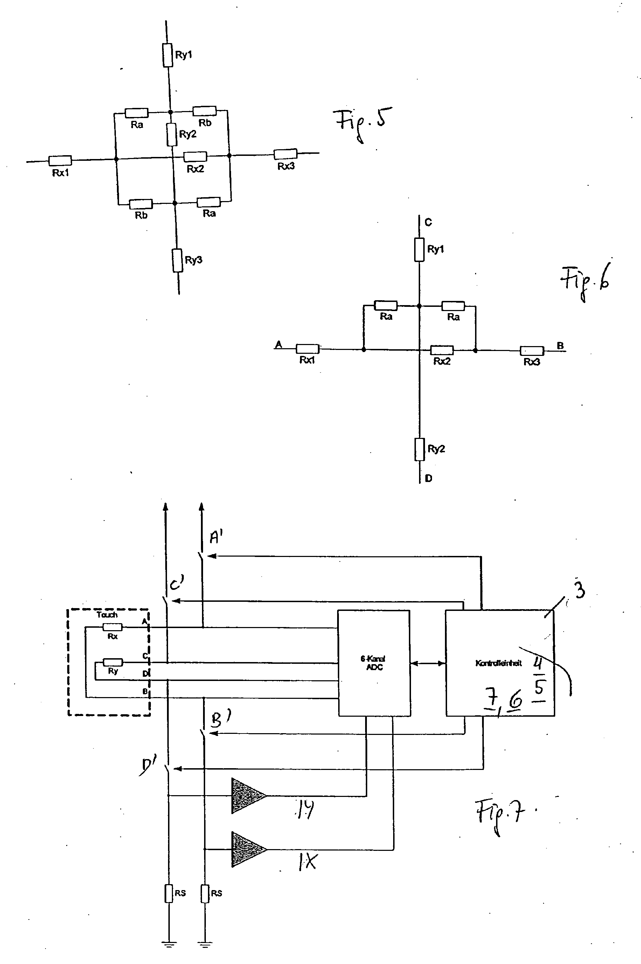

Aus dem Blockschaltbild gemäß Fig. 3 erkennt man, dass mit einer Mess- bzw. Steuereinheit 3, die entsprechende Messspannungen an die Anschlüsse A, B oder C und D gelegt bzw. die entsprechenden an diesen Punkten auftretenden Spannungen gemessen werden können. Das Anliegen der Spannungen bzw. das Anschließen der Anschlusspunkte A, B bzw. C, D zur Spannungsmessung an die Steuereinheit 3 erfolgt über entsprechende Steuerschalter A', B', C', D', die von der Steuereinheit 3 betätigbar sind.

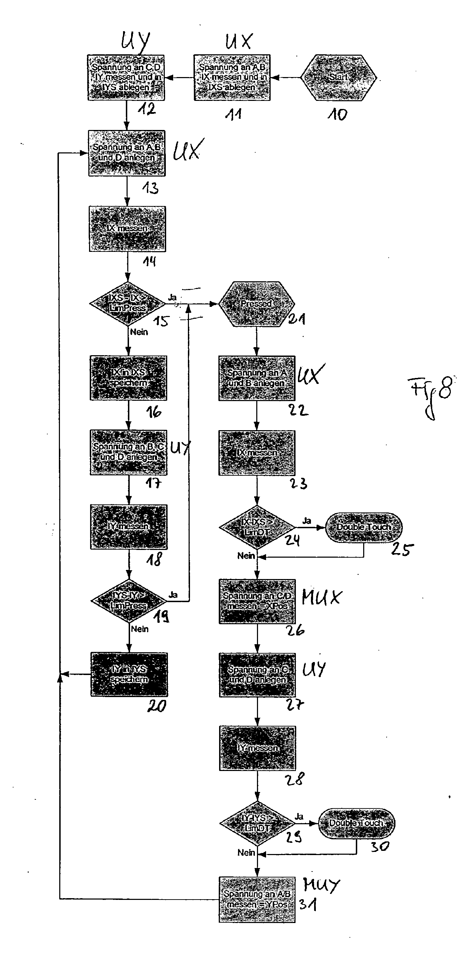

Fig. 4 beschreibt das bisher übliche Messverfahren zur Feststellung des Vorliegens und der Lage eines Touches. Nach dem Start der Messung erfolgt ein Anlegen einer vorgegebenen Spannung an die Anschlusspunkte A und B der Messfolie 1 mehr als zweihundert Mal pro Sekunde. An die Anschlussstelle D der anderen Messfolie 2 wird eine Spannung angelegt, um diese Widerstandsfolie 2 auf ein definiertes Spannungsausgangsniveau (0V) zu bringen. Nach einer kurzen Zeitspanne wird nur an die Anschlussstellen A und B dieselbe Spannung wieder angelegt und an der Anschlussstelle D die auftretende Spannung gemessen.

Ergibt sich, dass die Spannung an der Anschlussstelle D kleiner ist als ein vorgegebener Spannungswert bzw. die bislang an dieser Anschlussstelle gemessene Spannung nicht überschreitet, so bedeutet dies, dass kein Touch vorliegt. Ist die an der Anschlussstelle D gemessene Spannung größer als ein vorgegebener bzw. der zuvor gemessene Spannungswert, so wird dies als Vorliegen eines Touches gewertet und es wird in Folge in entsprechender Weise die Position des Touches errechnet. Dazu wird eine vorgegebene Messspannung zwischen den Anschlussstellen A und B angelegt und die auftretende Spannung zwischen den Anschlussstellen C und D gemessen. Aufgrund der Höhe des gemessenen Spannungswertes kann eine Aussage über die X-Position des Touches getroffen werden. Im folgenden wird eine vorgegebene Messspannung an die Anschlussstellen C und D angelegt und die auftretende Spannung zwischen den Anschlussstellen A und B gemessen. Daraus kann die Lage des Touches in Y-Richtung ermittelt werden.

Der Nachteil dieser Vorgangsweise ist, dass ein Double Touch, d.h. wenn an zwei Punkten der Touch-Einheit gleichzeitig gedrückt wird, nur die Lage eines virtuellen Punktes in mittlerer Lage ermittelt werden kann, und nicht festgestellt werden kann, dass an zwei verschiedenen Stellen gedrückt wurde.

Das Ersatzschaltbild für einen Double Touch ist in Fig. 5 wiedergegeben. Es wurde angenommen, dass RY2=0 ist, d.h. die zwei Druckpunkte liegen in der X-Achse. Dann ergibt sich Ra=Rb. Das Ersatzschaltbild für diese vereinfachte Annnahme ist in Fig. 6 dargestellt. Es ergibt sich, dass Ra = Rx2/2.

Damit ist gut zu sehen, dass in X-Richtung der virtuelle mittlere Punkt ermittelt wird. Bei einer getroffenen Annahme von A = 5V und B = 0V teilt sich der Strom zu gleichen Teilen bei Rx2 und 2*Ra auf, damit ergibt sich ein Spannungswert zwischen Punkt C oder D, der genau der Mitte zwischen den beiden tatsächlichen Touch-Positionen entspricht.

Bei einem Single Touch ist der Widerstand immer konstant, d.h. wird z.B. in der X-Richtung die Messspannung angelegt, so ist der Widerstand, durch den der Messstrom fließen muss, immer Rx. Wird aber z.B. ein Double Touch in X-Achse ausgelöst, wie oben gezeigt, so bildet sich über Rx2 eine parallel Schaltung von zwei Widerständen, die auch ungefähr gleich groß sind. Rx2 ist der Widerstand auf der "X-Folie", während der parallel geschaltete Widerstand auf der "Y-Folie" ausgebildet ist. Dieser parallele Widerstand Ra+Ra wird durch die beiden Druckpunkte bestimmt und auch den Strom bestimmt.

Das hat aber zur Folge, dass sich der Widerstand Rx ändert.

Rx = RX1 + RX2 bei einem Single Touch. (Fig. 2)

Rx = Rx1 + (Rx2/2) + Rx3 bei einem Double Touch, d.h. der Widerstand wird kleiner, und somit wird der Strom, der zwischen den Anschlussstellen A, B fließt, größer. (Fig. 6)

Je größer Rx2 ist und damit die Distanz zwischen den zwei Druckpunkten, desto größer wird auch der Strom, da der Gesamtwiderstand abnimmt.

Um nun einen Double Touch erkennen zu können, wird zusätzlich der Strom gemessen, und mit einem vorher oder nachher gemessenen Stromwert verglichen. Ist der Unterschied größer als ein vorgegebenes Limit, so liegt ein Double Touch vor und kann signalisiert werden. Da die Stromänderungen mitunter sehr gering ausfallen können, je näher zueinander die Touches des Double Touch ausgelöst werden, wird die Strommessung mit eigenen ADC Kanälen durchgeführt, so wie in Fig. 7 dargestellt.

Fig. 8 zeigt schematisch ein Flussdiagramm betreffend die erfindungsgemäße Vorgangsweise. Diese Vorgangsweise gliedert sich in eine, insbesondere vorab erfolgende Feststellung, ob überhaupt ein Touch vorliegt, gefolgt von einer Überprüfung, ob ein Double Touch vorliegt, gefolgt von einer Vermessung der Position eines Touches, sofern festgestellt wurde, dass nur ein Touch vorliegt. Diese Überprüfungen erfolgen jeweils abwechselnd für die beiden Widerstandsfolien 1, 2, um entsprechende Feststellungen für die X-Richtung bzw. die Y-Richtung treffen zu können. Prinzipiell könnte die erfindungsgemäße Überprüfung auch nur für eine Widerstandsfolie bzw. eine der beiden Richtungen vorgenommen werden; dies insbesondere ist dann möglich, wenn davon ausgegangen wird, dass ein Double Touch, bei dem die beiden Touches dieselbe X-Position oder dieselbe Y-Position einnimmt, ausgeschlossen oder toleriert wird. Die Reihenfolge, in der die Überprüfung bzw. Vermessung der Widerstandsfolien vorgenommen wird, ist beliebig. Des weiteren ist es prinzipiell auch möglich, die Vermessung eines Touches vorzunehmen und erst nachher festzustellen, ob ein Double Touch vorliegt und dann den erhaltenen Wert zu verwerfen. Die Feststellung des Vorliegens eines Double Touches vor der Vermessung der an den Widerstandsfolien auftretenden Spannungen und Stromflüsse ist aus Gründen der Einfachheit des Schaltungsaufbaues vorzuziehen.

Das in Fig. 8 beschriebene Verfahren wird pro Sekunde 100 bis 2000 Mal vorgenommen und aufgrund der für die erforderlichen Messungen bzw. für das Anlegen der Spannung und für die Strommessung sich ergebenden kurzen Zeiten ist es nicht sehr erheblich, in welcher Reihenfolge die entsprechenden Schritte vorgenommen werden.

Im folgenden werden die einzelnen Schritte des erfindungsgemäßen Verfahrens erläutert.

Schritt 10: Es erfolgt der Start eines Messzyklus.

Schritt 11: Es wird an die Widerstandsfolie 1 an den Anschlussstellen A, B eine vorgegebene Spannung UX angelegt und der durch die Messfolie 1 fließende Strom IX gemessen. Der Wert dieses Stromes wird für nachfolgende Messungen verwendet und als Sollstromwert IXS abgespeichert.

Schritt 12: An die Anschlussstellen C, D der Widerstandsfolie 2 wird eine vorgegebene Spannung UY angelegt und der durch die Widerstandsfolie 2 fließende Strom gemessen. Dieser Ist-Stromwert IY wird allenfalls als neuer Sollstromwert IYS vergleichbar mit Schritt 16 abgespeichert.

Die vorgegebenen Spannungen UX und UY entsprechen der Größe nach den zur Feststellung eines Vorliegens eines Touches bzw. zur Überprüfung, ob ein Double Touch vorliegt, eingesetzten Spannungen. Diese Spannungen müssen jedoch nicht den Messspannungen entsprechen, mit denen die Position eines Single Touches ermittelt wird.

Schritt 13: Zur Feststellung, ob überhaupt ein Touch vorliegt, wird die Spannung UX an die Anschlussstellen A, B gelegt. Des weiteren wird eine Spannung an die Anschlussstelle D angelegt.

Schritt 14: Es wird der in der Widerstandsfolie 1 zwischen den Anschlussstellen A und B fließende Strom IX gemessen.

Schritt 15: Es erfolgt ein Vergleich des anfänglich gemessenen Soll-Stromwertes IXS mit dem in Schritt 14 gemessenen Stromwert IX. Sofern die Differenz zwischen dem Sollstromwert IXS und dem in Schritt 14 gemessenen Stromwert IX ein gewünschtes Mindestmaß LimPress überschreitet, wird dies als Vorliegen eines Touches gewertet und einer Touchprüfeinheit (siehe Schritt 21) zugeführt. Sofern das Prüfkriterium entsprechend Schritt 15 nicht erfüllt ist, wird der gemessene Strom IX als neuer Sollstromwert IXS gemäß Schnitt 16 abgespeichert, um allenfalls bei gleicher Spannung an den Anschlussstellen A und B sich durch Widerstandsänderungen ergebende, z.B. aufgrund einer Erwärmung der Widerstandsfolien, unterschiedliche Stromflüsse berücksichtigen können.

Schritt 17: Es erfolgt wie in Schritt 13 dargestellt, ein Anlegen einer Spannung an die Anschlussstellen B, C und D.

Schritt 18: Es erfolgt eine Messung des Stromes IY, der zwischen den Anschlussstellen B und C fließt.

Schritt 19: Es erfolgt ein Vergleich des Sollstromwertes IYS mit dem in Schritt 18 gemessenen Strom IY bzw. die Feststellung ob die gebildete Differenz größer ist als ein vorgegebener Stromwert LimPress. Sofern diese Differenz größer ist, wird dies als Vorliegen eines Touches gewertet und es wird die Erfüllung dieses Kriteriums in Schritt 21 berücksichtigt.

Wird die vorgegebene Differenz LimPress nicht überschritten, so erfolgt Schritt 20: Es wird der gemessene Stromwert IY als neuer Sollstromwert IYS gespeichert und wieder mit Schritt 13 fortgesetzt. Dies bedeutet, dass ein Touch nicht vorliegt; sowohl die Überprüfung der Widerstandsfolie 1 als auch eine Überprüfung der Widerstandsfolie 2, d.h. eine Überprüfung der X-Position oder Y-Position eines Touches, ergaben negative Ergebnisse.

Sofern in den Schritten 15 und 19 jedoch ein positives Vergleichskriterium erhalten wurde, wird bei Vorliegen von zumindest einem positiven Vergleichsergebnis angenommen, dass ein Touch vorliegt, d.h. die Toucheinheit gedrückt wurde.

Schritt 21: Hier erfolgt die Auswertung der in Schritt 15 und 19 generierten Signale.

Schritt 22: Es wird die Prüfspannung UX an die Anschlussstellen A und B der Widerstandsfolie 1 angelegt.

Schritt 23: Es wird der bei Anlegen der Messspannung UX an der Widerstandsfolie 1 auftretende Iststrom IX gemessen.

Schritt 24: Es erfolgt ein Vergleich des auftretenden Iststromes IX mit dem abgespeicherten Sollstromwert IXS. Sofern sich eine positive Differenz ergibt, die größer als ein vorgegebener Schwellwert LimDT ist, so wird dies in Schritt 25 als Vorliegen eines Double Touches gewertet.

Sofern der Schwellwert nicht erreicht wird, wird fortgesetzt mit

Schritt 26: Es wird die an den Anschlussstellen C und D auftretende Spannung gemessen und diese Spannungswerte werden zur Bestimmung der X-Position des vorliegenden Touches verwendet.

Schritt 27: Als weiterer Schritt wird, vergleichbar mit Schritt 22, die Messspannung UY an die Anschlussstellen C und D angelegt. Es wird bemerkt, dass die Messspannungen UX und UY nicht gleich groß sein müssen.

Schritt 28: Es erfolgt die Messung des durch die Widerstandsfolie 2 zwischen den Anschlussstellen C und D fließenden Stromes IY.

Schritt 29: Es erfolgt ein Vergleich dieses fließenden Stromes IY mit dem zuletzt gespeicherten Sollstromwert IYS bzw. die Feststellung, ob eine positive Differenz vorliegt, die einen vorgegebenen Schwellwert LimDT überschreitet. Zutreffendenfalls wird in Schritt 30 das Vorliegen eines Doppeltouches angenommen. Wird der Schwellwert nicht überschritten, so folgt

Schritt 31: In diesem Schritt wird die an den Anschlussstellen A und B auftretende Spannung gemessen und vergleichbar mit dem Schritt 26, aus diesem Messwert die Y-Position des festgestellten Touches ermittelt.

In dem Moment, in dem in Schritt 24 bzw. in Schritt 29 das Vorliegen eine Double Touches festgestellt wird, kann das Messverfahren unterbrochen werden und es erfolgt ein Neubeginn des Verfahrens mit Schritt 13, oder es kann weiter mit der Koordinatenmessung fortgefahren werden.

Sofern das Vorliegen von nur einem Touch festgestellt wurde und die Messung der Position des Touches erfolgt ist, erfolgt nach Schritt 31 eine Rückkehr zu Schritt 13.

Aus den in den Schritten 26 und 31 erhaltenen Spannungswerten wird in der Steuer- bzw. Auswerteeinheit 3 die entsprechende Position des Touches auf der Toucheinheit ermittelt.

Aus Fig. 7 ist ersichtlich, dass die Eingänge der Spannungsstrommesseinheit 7 von einem Sechskanal-ADC gebildet sind und zwischen die Widerstände RS und die Anschlussstellen B und D der jeweiligen Widerstandsfolie 1 bzw. 2 angeschlossen sind. In der Kontrolleinheit bzw. Mess- und Steuereinheit sind die entsprechenden Messeinrichtungen bzw. Einheiten zur Spannungsgenerierung und Vergleicher integriert. Diese Einheit kann hardwaremäßig oder auch durch entsprechende Software und von dieser gesteuerte Hardwareeinrichtungen realisiert werden.

Zur Erhöhung der Exaktheit des erfindungsgemäßen Verfahrens kann vorgesehen sein, dass mehrere aufeinanderfolgend gemessene Strom- bzw. Spannungswerte gemittelt werden und die erhaltenen Mittelwerte der weiteren Auswertung zugrunde gelegt werden.

## Patentansprüche

1. Verfahren zur Auswertung von Touch-Signalen einer analog resistiven Touch-Einheit, die zwei im Abstand voneinander angeordnete Widerstandsfolien (1, 2) umfasst, die in zueinander senkrechten Richtungen (X-Richtung, Y-Richtung) an ihren jeweiligen gegenüberliegenden beiden Endbereichen (A, B bzw. B, C) kontaktiert sind, wobei zur Feststellung der Lage eines Touches in den Endbereichen (A, B bzw. D, C) zumindest einer der Widerstandsfolien (1, 2) eine Messspannung (MUX, MUY) angelegt wird und auf der jeweils anderen Widerstandsfolie in der dazu senkrechten Richtung auftretenden der Spannungsabfall gemessen wird, und wobei zusätzlich zur Feststellung von Double Touches in den Widerstandsfolien (1, 2) auftretende Ströme (IX, IY) gemessen werden, **dadurch gekennzeichnet, dass**

a) in zumindest einer der beiden, vorzugsweise in beiden, Widerstandsfolien (1, 2) der bei Anlegen einer vorgegebenen Prüfspannung (UX, UY) hervorgerufene Strom (IX, IY) gemessen und als Sollstromwert (IXS, IYS) gespeichert wird,

b) dass, insbesondere nach Feststellung des Vorliegens zumindest eines Touches, der bei einem neuerlichen Anlegen der Prüfspannung an zumindest eine der Widerstandsfolien (1, 2) der in dieser Widerstandsfolie (1, 2) fließende Iststrom (IX, IY) gemessen und mit dem zuvor für diese Widerstandsfolie (1, 2) erhaltenen Sollstromwert (IXS, IYS) verglichen wird, und

c) dass für den Fall, dass der in zumindest einer der Widerstandsfolien (1, 2) gemessene Iststrom (IX, IY) größer ist, insbesondere um einen vorgegebenen Wert größer (LimDT) ist, als der Sollstromwert (IXS, IYS), das Vorliegen eines Double Touches angenommen wird.

**2.** Verfahren nach Anspruch 1, **dadurch gekennzeichnet, dass**, insbesondere vor dem Vergleich des bei der neuerlichen Messung erhaltenen Messwertes für den Iststrom (IX, IY) und dem gespeicherten Sollstromwert (IXS, IYS) eine Überprüfung erfolgt, ob zumindest ein Touch vorliegt, indem überprüft wird, ob der nach Anlegen der Prüfspannung (UX, UY) an einer der beiden Widerstandsfolien (1, 2) der in den jeweils anderen Widerstandsfolie (1, 2) gemessene Strom (IX, IY) um einen vorgegebenen Wert (LimPress) kleiner ist als der erhaltene Sollstromwert (IXS, IYS), und die Erfüllung dieses Kriteriums als Vorliegen zumindest eines Touches gewertet wird.

**3.** Verfahren nach Anspruch 1 oder 2, **dadurch gekennzeichnet, dass** die Strommessungen und die Vergleiche hundert bis zweitausend mal, insbesondere zweihundert bis tausend mal, pro Sekunde vorgenommen werden.

**4.** Verfahren nach einem der Ansprüche 1 bis 3, **dadurch gekennzeichnet, dass** die gemessenen Stromwerte (IX, IY, IXS, IYS) digitalisiert werden und ein Vergleich der digitalisierten Stromwerte vorgenommen wird.

**5.** Touch-Einheit mit einer Einrichtung zur Feststellung von Double Touches, wobei die analog resistive Touch-Einheit zwei im Abstand voneinander angeordnete Widerstandsfolien (1, 2) umfasst, die in zueinander senkrechten Richtungen (X-Richtung, Y-Richtung) an ihren beiden gegenüberliegenden Endbereichen kontaktiert sind, wobei zur Feststellung der Lage des Touches an die Endbereiche zumindest einer der Widerstandsfolien (1) eine Messspannung (MUX, MUY) angelegt wird und auf der jeweils anderen Widerstandsfolie (2, 1) in der dazu senkrechten Richtung der Spannungsabfall gemessen wird, wobei zumindest eine Steuer- bzw. Auswerteeinheit (3) mit einer Spannung-Strommesseinheit (7) für den in zumindest einer Widerstandsfolie (1, 2) fließenden Strom vorgesehen ist, insbesondere zur Durchführung des Verfahrens nach einem der Ansprüche 1 bis 4, **dadurch gekennzeichnet,**

- **dass** die Spannung-Strommesseinheit (7) den in zumindest einer der beiden Widerstandsfolien (1, 2) bei Anlegen der vorgegebenen Prüfspannung (UX, UY) hervorgerufenen Stromes (IX, IY) misst,
- **dass** eine Speichereinheit (4) für diese erhaltenen Sollstromwerte (IXS, IYS) vorgesehen ist,
- **dass** ein Vergleicher (5) vorgesehen ist, mit dem, vorzugsweise vor jeder Koordinatenermittlung (26,31), der in der jeweiligen Widerstandsfolie (1, 2) bei Anlegen der Prüfspannung (UX, UY) fließende Iststrom (IX, IY) mit dem Sollstromwert (IXS, IYS) verglichen wird, welcher Iststrom (IX, IY) sich durch das Anlegen der Messspannung (MUX, MUY) an eine der Widerstandsfolien (1, 2) ergibt, und
- **dass** der Fall, dass der resultierende Iststrom (IX, IY) um einen vorgegebenen Wert (LimDT) größer ist als der Sollstromwert (IXS, IYS), als Vorliegen eines Double Touches bewertet wird.

**6.** Touch-Einheit nach Anspruch 5, **dadurch gekennzeichnet, dass** ein weiterer Vergleicher (6) vorgesehen ist, in dem eine Prüfung erfolgt, ob zumindest einer der gespeicherten Stromwerte (IXS, IYS) um einen vorgegebenen Wert (LimPress) größer ist als einer der gemessenen Stromwerte (IX, IY) und bei positiven Prüfungsergebnis das Vorliegen eines Touches angenommen wird.

**7.** Touch-Einheit nach Anspruch 5 oder 6, **dadurch gekennzeichnet, dass** jeweils eine Anschlussstelle (B, D) der Widerstandsfolien (1, 2), gegebenenfalls über einen Widerstand (RS), an Masse bzw. ein Potential von Null Volt angeschlossen ist und dass die Spannung-Strommesseinheit (7) zwischen diesen Anschlussstellen (B, D) und dem jeweiligen Widerstand (RS) angeschlossen ist.

Fig.1

Fig 2

Fig 3

Fig 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040090431 A
- US 20030063073 A